# EUROPEAN PATENT SPECIFICATION

(11) **EP 3 823 083 B1**
(45) Date of publication and mention of the grant of the patent: **21.10.2026**
(21) Application number: 19884936.6
(22) Date of filing: 13.11.2019
(51) Int. Cl.: H01M 10/6567, H01M 10/655, H01M 10/613, H01M 10/625, H01M 50/204

(54) **BATTERY PACK INCLUDING COOLING MEMBER AND DEVICE INCLUDING THE SAME**
BATTERIEPACK MIT KÜHLELEMENT UND VORRICHTUNG DAMIT
BLOC-BATTERIE COMPRENANT UN ORGANE DE REFROIDISSEMENT ET DISPOSITIF LE COMPRENANT

(30) Priority: 16.11.2018 KR 20180141847
(43) Date of publication of application: 19.05.2021
(73) Proprietor: LG Energy Solution, Ltd., Seoul 07335 (KR)
(72) Inventor: UM, Jae Ho, Daejeon 34122 (KR); CHOI, Sang Kyu, Daejeon 34122 (KR); ROH, Sukmyung, Daejeon 34122 (KR)
(74) Representative: Plasseraud IP
(86) International application number: PCT/KR2019/015457
(87) International publication number: WO 2020/101354

(56) References cited:
- CN-A- 108 448 022
- JP-B2- S5 913 176
- KR-A- 20060 118 113
- KR-A- 20140 084 487
- KR-A- 20140 143 854
- KR-B1- 100 684 758
- KR-B1- 101 589 931
- US-A1- 2014 072 856

## Description

### [TECHNICAL FIELD]

### Cross Citation with Related Application(s)

This application claims the benefit of Korean Patent Application No. 10-2018-0141847 filed on November 16, 2018 with the Korean Intellectual Property Office.

The present disclosure relates to a battery pack, and more particularly, to a battery pack including a cooling member.

### [BACKGROUND ART]

Secondary batteries, which are easily applied to various product groups and has electrical characteristics such as high energy density, are universally applied not only for a portable device but also for an electric vehicle (EV) or a hybrid electric vehicle (HEV), an energy storage system or the like, which is driven by an electric driving source. The secondary battery is attracting attention as a new environment-friendly energy source for improving energy efficiency since it gives a primary advantage of remarkably reducing the use of fossil fuels and also does not generate by-products from the use of energy at all.

A battery pack for use in electric vehicles has a structure in which a plurality of cell assemblies, each including a plurality of unit cells, are connected in series to obtain a high output. In addition, the unit cell can be repeatedly charged and discharged by electrochemical reactions among components, which include a positive electrode current collector, a negative electrode current collector, a separator, an active material, an electrolyte and the like.

Meanwhile, recently, as the need for a large capacity structure is increasing along with the utilization as an energy storage source, there is a growing demand for a battery pack with a multi-module structure in which a plurality of battery modules, each including a plurality of secondary batteries connected in series and/or in parallel, are integrated.

Since the battery pack with a multi-module structure is manufactured in a form in which a plurality of secondary batteries are densely packed in a narrow space, it is important to easily dissipate heat generated by each of the secondary batteries. As one of various methods for dissipating the heat generated by the secondary battery, KR 10-2016-0109679 A discloses a battery pack having a configuration in which a battery module and a cooling plate for cooling the same are provided in a housing.

However, if the cooling plate is installed together inside the battery housing as in KR 10-2016-0109679, heat can be quickly discharged, but this method has a limitation in that the cooling efficiency is not high.

KR 100 684 758 B1 discloses a battery pack comprising a housing in which at least one battery cell or battery module is built, and coolant flow channels between unit cells provided inside the housing to cool the battery cells. A refrigerant inflow port and a refrigerant outflow port are connected to the heat exchange member, wherein a Peltier element is installed in the refrigerant inflow port.

Further prior art is disclosed in US 2014/072856 A1 and CN 108 448 022 A.

### [DETAILED DESCRIPTION OF THE INVENTION]

### [TECHNICAL PROBLEM]

It is an object of the present disclosure to provide a battery pack capable of increasing cooling efficiency.

However, the problem to be solved by the embodiments of the present disclosure is not limited to the above-described problems, and can be variously expanded within the scope of the technical idea included in the present disclosure.

### [TECHNICAL SOLUTION]

This object is accomplished with a battery pack comprising the features of patent claim 1.

Dependent claims are directed on features of preferred embodiments of the present disclosure.

### [ADVANTAGEOUS EFFECTS]

According to the embodiments, it is possible to realize a battery pack capable of increasing substantial cooling efficiency by installing a rapid cooling member directly to a refrigerant inflow port located outside the battery pack.

### [BRIEF DESCRIPTION OF THE DRAWINGS]

FIG. 1 is an exploded perspective view illustrating an internal configuration of a battery pack according to one embodiment of the present disclosure.
FIG. 2 is an exploded perspective view illustrating an external configuration of the battery pack of FIG. 1.
FIG. 3 is a perspective view in the direction which looks the bottom of the housing included in the battery pack of FIG. 1.
FIG. 4 is a bottom view illustrating a bottom surface of a housing included in the battery pack of FIG. 1.
FIG. 5 is a plan view illustrating a state in which a heat exchange member is coupled to a housing included in the battery pack of FIG. 1.
FIG. 6 is a perspective view in the direction which looks the bottom of the housing included in the battery pack according to another embodiment of the present disclosure.
FIG. 7 is a perspective view in the direction which looks the bottom of the housing included in the battery pack according to yet another embodiment of the present disclosure.

### [DETAILED DESCRIPTION OF THE EMBODIMENTS]

Hereinafter, various embodiments of the present disclosure will be described in detail with reference to the accompanying drawings so that those skilled in the art can easily implement them. The present disclosure may be modified in various different ways, and is not limited to the embodiments set forth herein.

Parts that are irrelevant to the description will be omitted to clearly describe the present disclosure, and like reference numerals designate like elements throughout the specification.

Further, in the drawings, the size and thickness of each element are arbitrarily illustrated for convenience of description, and the present disclosure is not necessarily limited to those illustrated in the drawings. **In** the drawings, the thickness of layers, regions, etc. are exaggerated for clarity. **In** the drawings, for convenience of description, the thicknesses of some layers and regions are exaggerated.

**In** addition, it will be understood that when an element such as a layer, film, region, or plate is referred to as being "on" or "above" another element, it can be directly on the other element and intervening elements may also be present. **In** contrast, when an element is referred to as being "directly on" another element, it means that other intervening elements are not present. Further, the word "on" or "above" means disposed on or below a reference portion, and does not necessarily mean being disposed on the upper side of the reference portion toward the opposite direction of gravity.

Further, throughout the specification, when a part is referred to as "including" a certain component, it means that it can further include other components, without excluding the other components, unless otherwise stated.

Further, throughout the specification, when referred to as "planar", it means when a target portion is viewed from the top, and when referred to as "cross-sectional", it means when a target portion is viewed from the side of a cross section cut vertically.

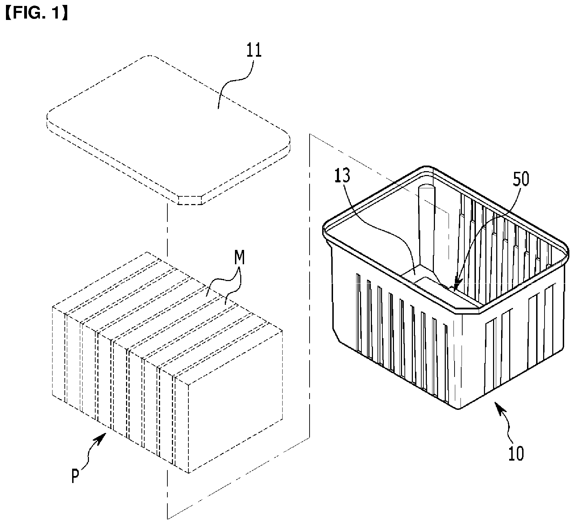

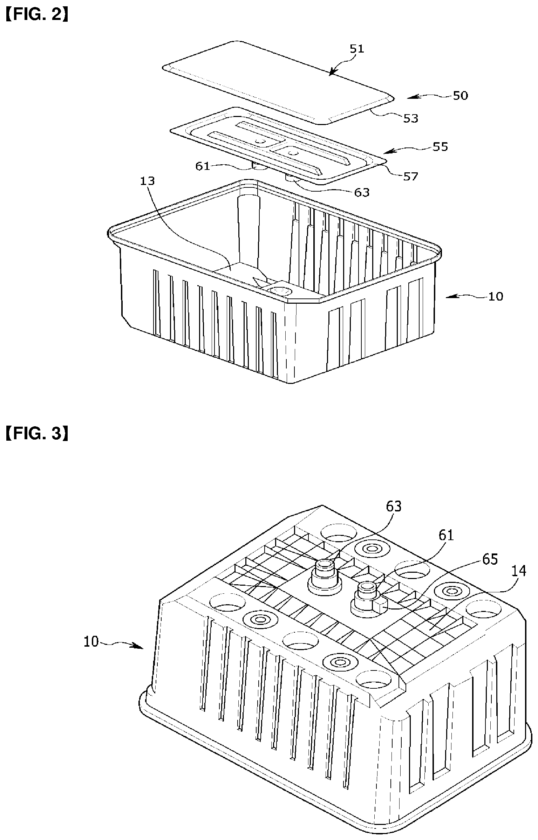

FIG. 1 is an exploded perspective view illustrating an internal configuration of a battery pack according to one embodiment of the present disclosure. FIG. 2 is an exploded perspective view illustrating an external configuration of the battery pack of FIG. 1. FIG. 3 is a perspective view in the direction which looks the bottom of the housing included in the battery pack of FIG. 1.

Referring to FIGS. 1 and 2, a battery pack according to the present embodiment includes a housing 10, a battery module M accommodated in the housing 10, and a cover covering the accommodated battery module M. Before the battery module M is accommodated, a heat exchange member 50 is installed on a bottom side of the housing 10.

The housing 10 may have a hexahedral structure with an opened upper part, and a cover 11 may be coupled to the upper part of the housing 10. The shape and structure of the housing 10 are not limited to those illustrated in the figures, and may be variously modified according to the implementation conditions as long as they are structures in which the battery cells or battery modules can be installed.

A plurality of battery modules M may be installed inside the housing 10. For example, as shown in FIG. 1, vertically erected battery modules M may be continuously arranged.

A heat exchange member 50 is installed on the bottom surface 13 of the housing 10 to adjust the temperature of the battery modules M. The heat exchange member 50 is a main component of a cooling system, and is configured to allow a refrigerant to pass therethrough, thereby adjusting the temperature of the battery module M.

The heat exchange member 50 may be formed into a cooling plate-type structure in which an upper plate 51 and a lower plate 55 are coupled to allow the refrigerant to pass therein, as shown in FIG. 2. The upper plate 51 is configured to make contact with the battery module M or the like disposed at an upper portion via a heat transfer member, etc., and the lower plate 55 is configured to be connected to a refrigerant inflow port 61 and a refrigerant outflow port 63 through which the refrigerant inflows and outflows, respectively.

The upper plate 51 and the lower plate 55 may be formed into a square planar structure having a certain thickness as shown in the figure, and may be also configured such that the circumferential edge portions thereof are joined together to allow the refrigerant to flow therein.

The lower plate 55 may be formed into a pan-like structure having a certain depth, and a flange portion 57 may be formed in a horizontal direction at the edge portion. The upper plate 51 may be formed into a planar structure, and may be formed in a structure in which the circumferential edge portion is more extended than the flange portion 57 of the lower plate 55. **In** particular, a skirt portion 53 bent downward may be formed at the circumferential edge end of the upper plate 51.

The joining structure between the upper plate 51 and the lower plate 55 is formed into a structure in which the flange portion 57 of the lower plate 55 and the bottom surface of the upper plate 51 making contact with the flange portion 57 are joined to each other in a state where the upper plate 51 is placed on the lower plate 55. With this structure, the heat exchange member 50 through which the refrigerant passes can be configured.

The skirt portion 53 formed on the circumferential edge portion of the upper plate 51 is configured to be inserted into or coupled to a sealing portion 20 of the housing 10 as described below.

Referring to FIG. 3, a rapid cooling member 65 is installed in the refrigerant inflow port 61 included in the battery pack according to the present embodiment. The rapid cooling member 65 functions to directly lower the temperature of the refrigerant in order to solve the problem associated with heat generation which has a limitation only by the development of the cell itself. In this case, if the temperature of the refrigerant becomes too low, the lifespan and efficiency of the battery cell may be rather reduced. In the present embodiment, however, in order to prevent the performance of the battery from dropping rapidly, the temperature of the refrigerant flowing into the housing 10 through the refrigerant inflow port 61 can be adjusted so as not to drop to a temperature of less than about 20 degrees Celsius. In other words, the temperature of the refrigerant flowing into the housing 10 through the refrigerant inflow port 61 can be maintained at 20 degrees Celsius to 30 degrees Celsius by the rapid cooling member 65. This is because, when the rapid cooling is performed on the outside, the cooling efficiency can be controlled by adjusting the area of the refrigerant inflow port 61, the time for performing the rapid cooling, etc. The temperature of a general refrigerant flowing into the refrigerant inflow port 61 may be approximately 40 degrees Celsius to 50 degrees Celsius.

The temperature range of the refrigerant flowing into the housing 10 through the refrigerant inflow port 61 as described above is one example, and may be slightly different depending on the type and performance of the battery cell, the refrigerant temperature range and refrigerant circulation speed of a vehicle, etc. equipped with the battery pack according to the present embodiment, etc. In other words, the upper and lower limits of the refrigerant temperature range can be adjusted depending on the amount of heat generated.

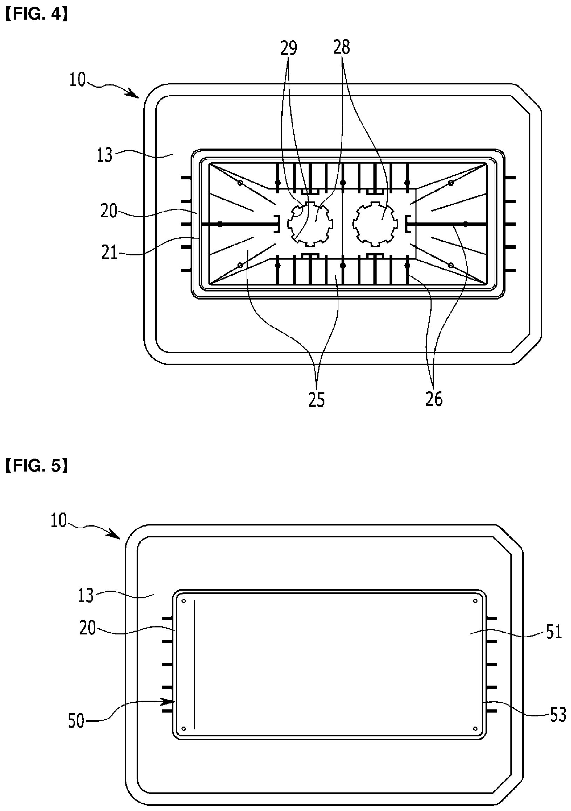

FIG. 4 is a bottom view illustrating a bottom surface of a housing included in the battery pack of FIG. 1. FIG. 5 is a plan view illustrating a state in which a heat exchange member is coupled to a housing included in the battery pack of FIG. 1.

Referring to FIGS. 4 and 5, a sealing portion 20, into which the skirt portion 53 of the heat exchange member 50 is inserted, is formed on a bottom surface 13 of the housing 10. When the circumferential surface of the heat exchange member 50 is formed in a square shape as in the present embodiment, it is preferable that the sealing portion 20 is also formed in a square shape.

The sealing portion 20 is formed into a groove structure and is preferably formed into a structure in which the skirt portion 53 of the heat exchange member 50 is inserted and fitted, but it is also possible to configure into a structure in which an inner wall 21 is removed from the sealing portion 20.

The lower surface 14 of the housing 10 is formed such that the central portion thereof protrudes downward as shown in FIGS. 3 and 4; and port holes 28 are formed at the lowest portion of the lower surface 14 such that the refrigerant inflow port 61 and the refrigerant outflow port 63 connected by the heat exchange member 50 are respectively inserted therein.

The bottom surface 13 of the housing 10 is preferably formed to have an inclined surface 25 that is gradually lowered from the sealing portion 20 toward the port hole 28 so that a leaked refrigerant which may possibly occur, can be discharged through the port hole 28.

In this case, the portion where the inclined surface 25 is formed is preferably configured such that a support rib 26 is protruded upward so as to support the lower surface of the heat exchange member 50. The support rib 26 is preferably disposed in a radial structure formed long around the port hole 28 to perform a smooth discharge of the leaked refrigerant, as shown in FIG. 4.

The reason why the bottom surface 13 of the housing 10 is inclined in this way is to be smoothly discharged out of the housing 10 through a port hole 28 after the leaked refrigerant flows along the inclined surface, in case where the refrigerant leaks from the heat exchange member 50.

Although this embodiment illustrates a structure in which the leaked refrigerant flows downward through the structure of the inclined surface 25, it is also possible to form a discharging flow path on the bottom surface 13 of the housing 10 without forming an inclined surface so that the leaked refrigerant is discharged.

The port hole 28 may be configured to form a gap or hole in a state where the inlet port 61 or the outlet port 63 is installed so that the leaked refrigerant is discharged smoothly. To this end, the inner surface of the port hole 28 may be formed into an uneven structure 29 as shown in FIG. 4. Alternatively, it is also possible to configure a portion for discharging the leaked refrigerant to the outside of the housing 10 by forming a separate hole on the bottom surface 13 of the housing 10 rather than the port hole 28.

Meanwhile, in the above description and figures, the heat exchange member 50 having a cooling plate structure has been described, but the present disclosure is not limited thereto. If it is a pack-type or cylindrical structure in which refrigerant flows therein, it may be configured by applying a structure blocking the inflow of the leaked refrigerant according to the present disclosure to various known heat exchange members.

The battery pack according to the present embodiment may use a water-cooled type cooling system. In the case of the water-cooled type cooling system, the radiator and the battery pack are connected to each other, so that the low-temperature refrigerant of the radiator can be sent to the battery pack and heat-changed to cool the battery pack, and the refrigerant whose temperature has risen due to heat exchange can be sent back to the radiator.

When the environment in which the battery is used becomes a high temperature environment due to heat generation, the battery life is rapidly shortened and the risk of exhaustion increases. Further, even if the resistance is drastically lowered to enhance the performance of the battery, the current consumption increases at the same time and, therefore, the problem of heat generation is hardly resolved by the development of the battery cell.

The maximum temperature of the battery cell or battery module or battery pack according to the current is not determined depending on the ambient temperature, but is determined depending on the temperature of the refrigerant and the battery cell itself. Therefore, according to an embodiment of the present disclosure, it is possible to effectively lower the practical use temperature. Specifically, according to the present embodiment, a rapid cooling member 65 is installed in the refrigerant inflow port 61 as shown in FIG. 3.

The rapid cooling member 65 according to the present embodiment can be installed in the refrigerant inflow port 61 to directly cool the refrigerant flowing into the battery pack. Since the rapid cooling member 65 is installed on the outside of the battery pack in this way, it does not affect the temperature of the battery pack. Heat generated due to cooling may escape through the refrigerant outflow port 63.

According to an embodiment of the present disclosure, the cooling system based on a structure in which the rapid cooling member 65 is installed in the refrigerant inflow port 61 is a method capable of directly lowering the T_{coolant}, and this method can affect even the T_{cell}, thereby increasing a substantial cooling effect. Cooling by a cooling fin and a perimeter, which have frequently been used in the past, is a method of cooling by merely sending the generated heat to the outside, that is, by controlling only Rₕₑₐₜ. However, the method according to an embodiment of the present disclosure is a cooling method that simultaneously affects not only Rₕₑₐₜ but also T_{cell} and T_{coolant}. Therefore, according to the cooling method of the present embodiment, the cooling efficiency can be greatly improved compared to the conventional method.

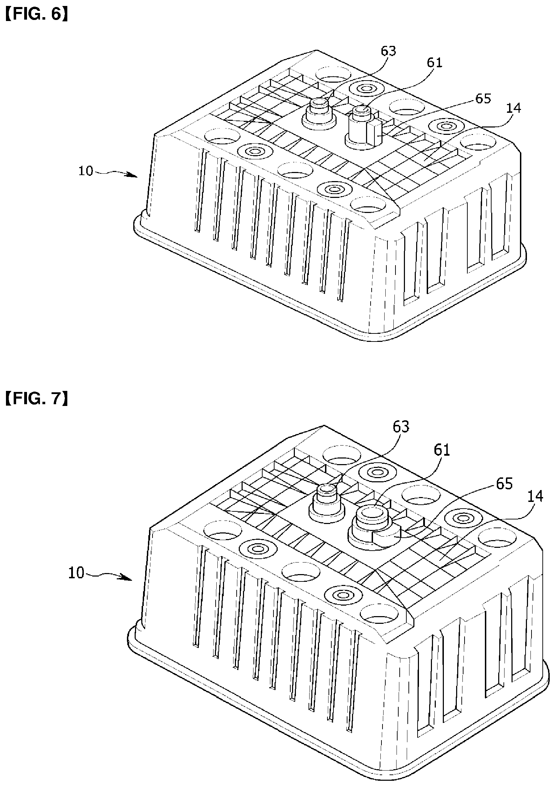

FIG. 6 is a perspective view in the direction which looks the bottom of the housing included in the battery pack according to another embodiment of the present disclosure. FIG. 7 is a perspective view in the direction which looks the bottom of the housing included in the battery pack according to yet another embodiment of the present disclosure.

When the refrigerant is cooled using the rapid cooling member according to the present embodiment, the temperature of the cooled refrigerant can be further lowered by adjusting at least one of the length and area of the refrigerant inflow port 61. Specifically, referring to FIG. 6, the temperature of the refrigerant flowing into the battery pack can be further reduced by increasing the length of the refrigerant inflow port 61. **In** this case, together with increasing the length of the refrigerant inflow port 61, the length of the rapid cooling member 65 installed in the refrigerant inflow port 61 may also be formed long.

**In** addition, referring to FIG. 7, the temperature of the refrigerant flowing into the battery pack can be further reduced by increasing the cross-sectional area of the refrigerant inflow port 61. Here, the cross-sectional area may mean an area of a surface cut in a direction perpendicular to the longitudinal direction (refrigerant inflow direction) of the refrigerant inflow port 61. In this case, together with increasing the cross-sectional area of the refrigerant inflow port 61, the area of the rapid cooling member 65 installed in the refrigerant inflow port 61 may also be formed large.

The above-mentioned the battery pack can be applied to various devices. Such devices include, but not limited to, transportation means such as an electric bicycle, an electric vehicle, and a hybrid vehicle.

### [DESCRIPTION OF REFERENCE NUMERALS]

10: housing
25: inclined surface
26: support rib
50: heat exchange member
61: refrigerant inflow port
63: refrigerant outflow port
65: rapid cooling member

## Claims

1. A battery pack comprising:
a housing (10) in which at least one battery cell or battery module (M) is built,
a heat exchange member (50) being provided inside the housing (10) to cool the battery cell or the battery module (M);
a refrigerant inflow port (61) and a refrigerant outflow port (63) connected to the heat exchange member (50),
a rapid cooling member (65) installed in the refrigerant inflow port (61),
wherein each of the refrigerant inflow port (61) and the refrigerant outflow port (63) has a structure protruding from the surface of the housing (10) to the outside of the housing (10), and the rapid cooling member (65) is installed in the refrigerant inflow port (61), and
wherein the lower surface of the housing (10) is formed such that the central portion thereof protrudes downward, and port holes (28) are formed at the lowest portion of the lower surface (13) such that the refrigerant inflow port (61) and the refrigerant outflow port (63) connected by the heat exchange member (50) are respectively inserted therein, and
wherein the port holes (28) are configured to form a gap or hole in a state where the refrigerant inflow port (61) and the refrigerant outflow port (63) are installed so that the leaked refrigerant is discharged smoothly.

2. The battery pack of claim 1, wherein the rapid cooling member (65) is formed to at least partially cover the outer surface of the refrigerant inflow port (61).

3. The battery pack of claim 1, wherein the length of the refrigerant inflow port (61) protruding from the housing (10) is longer than the length of the refrigerant outflow port (63) protruding from the housing (10).

4. The battery pack of claim 1, wherein the cross-sectional area of the refrigerant inflow port (61) is larger than that of the refrigerant outflow port (63).

5. The battery pack of claim 1, wherein an inclined surface (25) is formed on the bottom surface (13) of the housing (10).

6. The battery pack of claim 5, wherein a support rib (26) protrudes at a portion where the inclined surface (25) is formed on the bottom surface (13) of the housing (10) so as to support the heat exchange member (50).

7. The battery pack of claim 1, wherein the temperature of the refrigerant flowing into the refrigerant inflow port (61) is maintained at 20 degrees Celsius to 30 degrees Celsius by the rapid cooling member (65).

8. The battery pack of claim 1, wherein a sealing portion (20) into which a skirt portion (53) of the heat exchange member (50) is inserted is formed on the bottom surface (13) of the housing (10); and
the bottom surface (13) of the housing (10) is formed to have an inclined surface (25) that is gradually lowered from the sealing portion (20) toward the port hole (28) so that a leaked refrigerant can be discharged through the port hole (28).

9. A device comprising the battery pack according to claim 1.

## Patentansprüche

1. Batteriepack, umfassend:
• ein Gehäuse (10), in dem mindestens eine Batteriezelle oder ein Batteriemodul (M) eingebaut ist,
• ein Wärmetauschelement (50), das innerhalb des Gehäuses (10) vorgesehen ist, um die Batteriezelle oder das Batteriemodul (M) zu kühlen;
• einen Kältemitteleinlassanschluss (61) und einen Kältemittelauslassanschluss (63), die mit dem Wärmetauschelement (50) verbunden sind,
• ein Schnellkühlelement (65), das in dem Kältemitteleinlassanschluss (61) installiert ist,
• wobei sowohl der Kältemitteleinlassanschluss (61) als auch der Kältemittelauslassanschluss (63) eine Struktur aufweisen, die von der Oberfläche des Gehäuses (10) zur Außenseite des Gehäuses (10) vorsteht, und das Schnellkühlelement (65) in dem Kältemitteleinlassanschluss (61) installiert ist, und
• wobei die untere Oberfläche des Gehäuses (10) derart ausgebildet ist, dass deren mittlerer Abschnitt nach unten vorsteht, und Anschlusslöcher (28) am tiefsten Abschnitt der unteren Oberfläche (13) derart ausgebildet sind, dass der Kältemitteleinlassanschluss (61) und der Kältemittelauslassanschluss (63), die durch das Wärmetauschelement (50) verbunden sind, jeweils darin eingesetzt sind, und
• wobei die Anschlusslöcher (28) so konfiguriert sind, dass sie einen Spalt oder ein Loch in einem Zustand bilden, in dem der Kältemitteleinlassanschluss (61) und der Kältemittelauslassanschluss (63) installiert sind, sodass das ausgetretene Kältemittel reibungslos abgeführt wird.

2. Batteriepack nach Anspruch 1, wobei das Schnellkühlelement (65) so ausgebildet ist, dass es die Außenfläche des Kältemitteleinlassanschlusses (61) zumindest teilweise abdeckt.

3. Batteriepack nach Anspruch 1, wobei die Länge des Kältemitteleinlassanschlusses (61), der aus dem Gehäuse (10) vorsteht, länger ist als die Länge des Kältemittelauslassanschlusses (63), der aus dem Gehäuse (10) vorsteht.

4. Batteriepack nach Anspruch 1, wobei die Querschnittsfläche des Kältemitteleinlassanschlusses (61) größer ist als diejenige des Kältemittelauslassanschlusses (63).

5. Batteriepack nach Anspruch 1, wobei eine geneigte Oberfläche (25) an der Bodenfläche (13) des Gehäuses (10) ausgebildet ist.

6. Batteriepack nach Anspruch 5, wobei eine Stützrippe (26) an einem Abschnitt vorsteht, an dem die geneigte Oberfläche (25) an der Bodenfläche (13) des Gehäuses (10) ausgebildet ist, um das Wärmetauschelement (50) zu stützen.

7. Batteriepack nach Anspruch 1, wobei die Temperatur des in den Kältemitteleinlassanschluss (61) strömenden Kältemittels durch das Schnellkühlelement (65) auf 20 Grad Celsius bis 30 Grad Celsius gehalten wird.

8. Batteriepack nach Anspruch 1, wobei ein Dichtungsabschnitt (20), in den ein Schürzenabschnitt (53) des Wärmetauschelements (50) eingesetzt ist, an der Bodenfläche (13) des Gehäuses (10) ausgebildet ist; und
die Bodenfläche (13) des Gehäuses (10) so ausgebildet ist, dass sie eine geneigte Oberfläche (25) aufweist, die sich vom Dichtungsabschnitt (20) zum Anschlussloch (28) hin allmählich absenkt, sodass ein ausgetretenes Kältemittel durch das Anschlussloch (28) abgeführt werden kann.

9. Vorrichtung, umfassend das Batteriepack nach Anspruch 1.

## Revendications

1. Bloc-batterie comprenant :
• un boîtier (10) dans lequel au moins une cellule de batterie ou un module de batterie (M) est intégré,
• un organe d'échange de chaleur (50) étant prévu à l'intérieur du boîtier (10) pour refroidir la cellule de batterie ou le module de batterie (M) ;
• un orifice d'entrée de réfrigérant (61) et un orifice de sortie de réfrigérant (63) reliés à l'organe d'échange de chaleur (50),
• un organe de refroidissement rapide (65) installé dans l'orifice d'entrée de réfrigérant (61),
• dans lequel chacun de l'orifice d'entrée de réfrigérant (61) et de l'orifice de sortie de réfrigérant (63) présente une structure faisant saillie de la surface du boîtier (10) vers l'extérieur du boîtier (10), et l'organe de refroidissement rapide (65) est installé dans l'orifice d'entrée de réfrigérant (61), et
• dans lequel la surface inférieure du boîtier (10) est formée de telle sorte que sa partie centrale fait saillie vers le bas, et des orifices (28) sont formés au niveau de la partie la plus basse de la surface inférieure (13) de telle sorte que l'orifice d'entrée de réfrigérant (61) et l'orifice de sortie de réfrigérant (63) reliés par l'organe d'échange de chaleur (50) y sont respectivement insérés, et
• dans lequel les orifices (28) sont configurés pour former un espace ou un trou dans un état où l'orifice d'entrée de réfrigérant (61) et l'orifice de sortie de réfrigérant (63) sont installés de sorte que le réfrigérant ayant fui soit évacué de manière fluide.

2. Bloc-batterie selon la revendication 1, dans lequel l'organe de refroidissement rapide (65) est formé de manière à couvrir au moins partiellement la surface externe de l'orifice d'entrée de réfrigérant (61).

3. Bloc-batterie selon la revendication 1, dans lequel la longueur de l'orifice d'entrée de réfrigérant (61) faisant saillie du boîtier (10) est supérieure à la longueur de l'orifice de sortie de réfrigérant (63) faisant saillie du boîtier (10).

4. Bloc-batterie selon la revendication 1, dans lequel la section transversale de l'orifice d'entrée de réfrigérant (61) est supérieure à celle de l'orifice de sortie de réfrigérant (63).

5. Bloc-batterie selon la revendication 1, dans lequel une surface inclinée (25) est formée sur la surface de fond (13) du boîtier (10).

6. Bloc-batterie selon la revendication 5, dans lequel une nervure de support (26) fait saillie au niveau d'une partie où la surface inclinée (25) est formée sur la surface de fond (13) du boîtier (10) de manière à supporter l'organe d'échange de chaleur (50).

7. Bloc-batterie selon la revendication 1, dans lequel la température du réfrigérant s'écoulant dans l'orifice d'entrée de réfrigérant (61) est maintenue à 20 degrés Celsius à 30 degrés Celsius par l'organe de refroidissement rapide (65).

8. Bloc-batterie selon la revendication 1, dans lequel :
• une partie d'étanchéité (20) dans laquelle une partie de jupe (53) de l'organe d'échange de chaleur (50) est insérée est formée sur la surface de fond (13) du boîtier (10) ; et
• la surface de fond (13) du boîtier (10) est formée pour présenter une surface inclinée (25) qui s'abaisse progressivement depuis la partie d'étanchéité (20) vers le trou d'orifice (28) de sorte qu'un réfrigérant ayant fui puisse être évacué à travers le trou d'orifice (28).

9. Dispositif comprenant le bloc-batterie selon la revendication 1.
